# EUROPEAN PATENT APPLICATION

(11) **EP 4 293 219 A1**
(43) Date of publication of application: **20.12.2023**
(21) Application number: 22382573.8
(22) Date of filing: 15.06.2022
(51) Int. Cl.: F03D 13/10, F03D 80/80, F16B 41/00, F16B 27/00

(54) **FASTENING SYSTEM FOR ARRANGING BOLTS IN A TOWER ASSEMBLY**

(71) Applicant: Siemens Gamesa Renewable Energy Innovation & Technology S.L., 31621 Sarriguren (Navarra) (ES)
(72) Inventor: Señas Perez, Vicente, 31610 VILLAVA (ES)
(74) Representative: SGRE-Association

(57) **Abstract**

A fastening system is provided. The fastening system comprises a belt comprising securing means and at least one fastening device. The fastening device comprises a support unit configured to be attached to the belt, at least one clamping element configured to retain a bolt, a fixing plate and at least one retaining mean. The fixing plate is configured to move from a closed position to an open position. The retaining mean is movable from a first position to a second position. Methods for the installations of bolts are also provided.

## Description

### FIELD OF THE INVENTION

The present invention relates to a fastening system for arranging bolts in a tower assembly. The invention also relates to a method for installing bolts in a tower assembly.

### BACKGROUND OF THE INVENTION

In the field of wind turbines, some wind turbines have segmented towers and in order to join two tower sections, outer flanges are used. Such outer flanges have a plurality of holes. The outer flange of one tower section is connected to the outer flange of another tower section by means of bolts thereby joining both tower sections.

In order to carry the bolts from ground to its final position, a mobile elevating work platform is used wherein a technician stays to inserts the bolts one by one by hand into a corresponding assembling hole. The outer flange has typically about 170 - 200 holes. For safety reasons, two technicians are required. However, the mobile elevating work platform has a low weight capacity. Hence, due to the combined weight of the bolts and technicians, the basket of the mobile elevating working platform can only carry 7 - 10 bolts, requiring several travels to finalize the task. Thus, this technique requires a huge amount of time due the low weight capacity of the mobile elevating work platform.

To reduce the number of travels and also the time to carry the bolts, is known to arrange a pair of plastic bands to fix the bolts inside the assembling hole of a flange.

Another known solution comprises placing a plastic protection inside each assembling hole of the flange before performing the erection of the tower section, in order to protect and hold the bolts in place.

A typical disadvantage of such known solutions is that a considerable amount of time is required to arrange and secure the bolts within the corresponding assembling holes. In addition, a bolt may fall during the erection of the tower which may cause a severe accident, e.g. if a bolt falls and hit a technician.

It is therefore a goal of the present invention to provide a fastening system for arranging bolts in a tower assembly that reduces the assembling time of the tower sections and also increases the safety.

### SUMMARY OF THE INVENTION

The object of the invention is achieved by the independent claims. The dependent claims describe advantageous developments and modifications of the invention.

In a first aspect a fastening system for arranging bolts in a tower assembly is provided. The fastening system comprises a belt and at least one fastening device. The belt comprises securing means configured to tie the belt around the outer part of a wind turbine tower. The fastening device comprises a support unit, at least one clamping element, a fixing plate and at least one retaining mean.

The support unit is configured to be attached to the belt. The at least one clamping element is configured to retain a bolt therein. The fixing plate is arranged in the support unit and is configured to be moved from a closed position in which the bolt is to be secured and an open position to allow the insertion/removal of the bolt in/from the at least one clamping element. The at least one retaining mean is movable from a first position to a second position in which the retaining mean connects the fixing plate and the support unit thereby further securing the bolt within the at least one clamping element.

By having a fastening system, at least one bolt is arranged into the fastening system and is moved together with the tower section when is lifted until assembly stage. The safety is increased as the at least one bolt is securely fixed on position within the fastening system without any risk of fall during the performance of the task, thus preventing the bolt from fall during work at height and cause a severe accident to technicians.

In an example, the securing means may be a ratchet mechanism. By using a ratchet mechanism, the fastening system is more reliable and secure.

In an example, the at least one clamping element may be a single piece.

In an example, the clamping element may comprise two separate pieces.

In an example, the clamping element may be made of a soft material to allow different size bolts to be arranged therein tightly without causing any damage.

In an example, the fixing plate may further comprise a pivoting pin connecting the fixing plate to the support unit and thereby enabling the fixing plate to rotate with respect to the support unit. A pivoting pin facilitates releasing or introducing a bolt within the at least one clamping element which facilitates the installation process and further reduces the installation time.

In an example, the fixing plate may further comprise a locking pin for releasably locking the fastening device to the belt. The locking pin allows blocking the position of the fastening device on a determined position on the belt and therefore a more versatile system may be obtained.

In an example, the retaining mean may be a bar, a lever or a crowbar.

In an example, the shape of the retaining mean may be any of a U-shaped, L-shaped or straight. By having a U-shaped or L-shaped retaining mean, the pressure exerted may be increased and thus, the clamping elements may be tightly hold. A more secure fastening device may thus be obtained.

In an example, the fastening system may further comprise a slider plate arranged in the support unit side to be in contact with the wind turbine tower. By using a slider plate any damage or scratch from the belt to the tower may be avoided or at least substantially reduced.

In an example, the slider plate may be made of a soft material to further protect the tower e.g. the coating or paint from being damaged by the belt. In an example, the material of the slider plate may be rubber.

In an example, the support unit may further comprise a hole configured to allow the belt to be inserted therein, thereby allowing the support unit to be movable along the belt.

By having a hole in the support unit allows easily aligning the bolt with its corresponding assembling hole in the flange. A more versatile fastening system may therefore be obtained which may be adapted to different towers.

In an example, the support unit may be fixedly attached to the belt.

In an example, the fastening system may further comprise a plurality of fastening devices.

By having a plurality of fastening devices allows carrying a plurality of bolts thereby reducing installation time, as all the required bolts are transported together at the same time with the tower section when is lifted until assembly stage. Thereby, it is more efficient as avoids several travels with the mobile elevating platform by reducing the time of installing the at least one bolt.

The number of travels the mobile elevating work platform must realize up and down is reduced rendering the fastening system safer as the technicians have to work in height less time. Additionally, the safety is increased as all the bolts are securely fixed on position within the fastening system thus preventing the bolt from fall during work at height and cause a severe accident to technicians.

In addition, having a plurality of fastening devices enables adapting the fastening system to the number of bolts required for a specific tower flange, that is, a more versatile system may be obtained. As each fastening device may carry one bolt, the capacity of bolts at the fastening system will match to the number of fastening devices. Therefore, the number of fastening devices may be adapted to the number of assembling holes of the tower flange.

The tower flange may be a projecting rim or collar that protrudes from the tower section. The flanges may be part of the tower section or may be a separated piece and may serve to hold it in place and to give additional strength and/or stiffness. Additionally, it may be a supporting area which may provide a place for the attachment of other objects, e.g. another tower section. The tower flange may have assembling holes. The assembling holes of a tower flange may match with the assembling holes of the next tower section, wherein the tower sections may then be fixed to each other by introducing bolts in the assembling holes to adjoin the two tower sections.

In a further aspect, a method of installing bolts in a wind turbine tower with a segmented tower, having the segmented tower at least two tower sections, each tower section with a corresponding flange having a plurality of assembling holes, is provided. A fastening system according to any of the examples described herein may be provided.

A fastening system is provided. The fastening system comprises a belt and at least one fastening device. The belt comprises securing means configured to tie the belt around the outer part of a wind turbine tower. The fastening device comprises a support unit, at least one clamping element, a fixing plate, and at least one retaining mean as described above.

A bolt is provided. The bolt is inserted into the at least one clamping element of the at least one fastening device. By rotating the at least one retaining mean to the open position and then rotating the at least one clamping element in respect to the support unit, the bolt can be inserted within the at least one clamping element.

The bolt is then secured within the at least one clamping element by rotating it in the opposite direction to hold the bolt tight and the at least one retaining mean is rotated in the opposite direction to a closed position to further secure the bolt therein.

Once the bolt is placed in the fastening device, the belt is then arranged around the outer part of the tower section and tying thereto via the securing means. The tower section is then lifted and placed it in a predetermined assembling position. In the predetermined assembling position, the assembling holes of the flanges of two tower section e.g. a pre-installed tower section and subsequent tower section, are aligned. The tower sections may be placed above a previous installed tower section previously. Once both sections are aligned, the bolts may be placed in corresponding assembling holes.

Finally, the bolt is removed from the fastening device by rotating the retaining mean into the open position and the at least one clamping device is rotated to release the bolt. The bolt then is inserted in the corresponding assembling hole of the tower flange of the tower section. The belt is removed from the tower section.

By using this method, the technicians do not have to carry the bolts in the mobile elevating work platform, which due to the low weight capacity cannot carry all the bolts in one operation. Therefore, the amount of operations that the technicians have to do is reduced to a one-time operation. Thus, this method is more efficient as reduces the time of performing the task and increase the safety as the time that the technicians have to work on heights is also reduced.

### BRIEF DESCRIPTION OF THE DRAWINGS

Embodiments of the invention are now described, by way of example only, with reference to the accompanying drawings, of which:
- Figure 1: schematically illustrates a wind turbine with a segmented tower according to an example;
- Figure 2: schematically illustrates a perspective view of a fastening system according to an example; and
- Figures 3: schematically illustrates a perspective view of a fastening device according to an example;
- Figure 4A: schematically illustrates a perspective view of a fastening device in an open position according to an example;
- Figure 4B: schematically illustrates a perspective view of a fastening device in a closed position according to an example;
- Figure 5: shows a perspective view of a fastening system comprising a plurality of fastening devices according to an example;
- Figure 6: schematically illustrates a perspective view of a fastening system arranged in a tower according to an example;
- Figure 7: schematically illustrates a perspective view of a second embodiment of a fastening system;
- Figure 8A: schematically illustrates a plain view of the process of arranging a fastening system in a tower section according to an example;
- Figure 8B: schematically illustrates a plain view of the process of arranging a fastening system in a tower section according to an example; and
- Figure 9: schematically illustrates a flow chart of a method for installing bolts with a fastening system according to an example.

The illustration in the drawings is in schematic form. It is noted that in different figures, similar or identical elements may be provided with the same reference signs.

### DESCRIPTION OF THE DRAWINGS

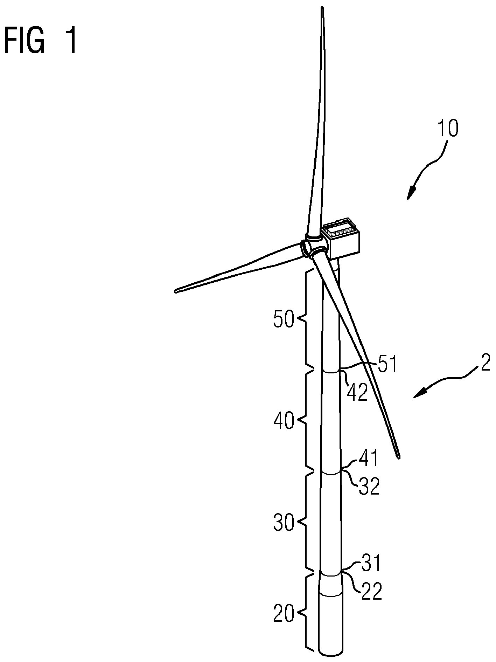

Fig. 1 depicts a wind turbine 10 with a segmented tower 2 comprising a plurality, e.g. four, tower sections 20, 30, 40, 50. Each tower section may comprise at least an outwardly protruding flange 22, 31, 32, 41, 42, 51. In some examples, each tower section may comprise a flange at each end, for example, tower section 40 may comprise flanges 41, 42. The flanges 22, 31, 32, 41, 42, 51 may have a plurality of assembling holes (not shown)configured to receive bolts.

The flanges 22, 31, 32, 41, 42, 51 may be used to join two tower sections together. For example, the tower section 30 may be joined to a previously erected tower section 20 via flanges 31 and 22 respectively. That is, during installation, the tower section 30 may be positioned on top of previously erected tower section 20, and then, the towers sections 20, 30 may be aligned i.e. the assembling holes of the respective flanges 22, 31 may be aligned. The tower sections 20- 30 may then be fixed to each other by introducing bolts 400 in the assembling holes.

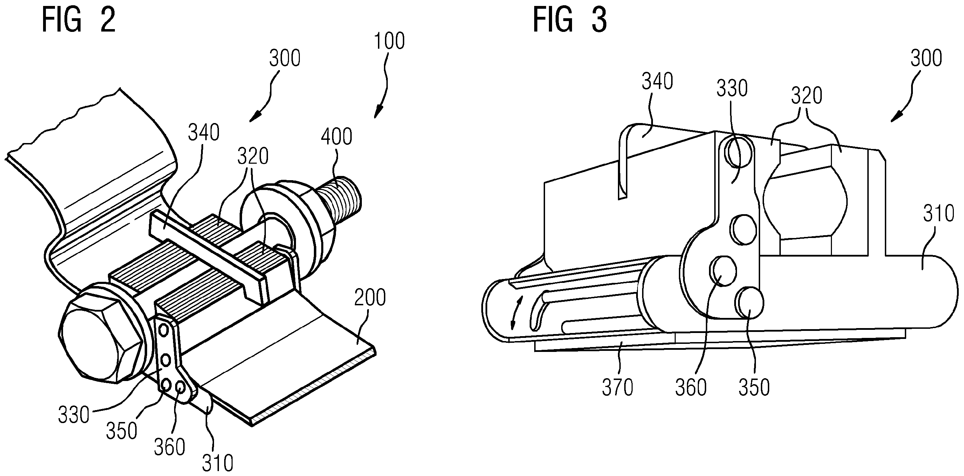

Fig. 2 depicts a fastening system 100 e.g. to carry at least a bolt 400 during the installation of a segmented tower 20. The fastening system 100 may comprise a belt 200 and a fastening device 300 (see figure 3).

The belt 200 may be made of a strong, durable and/or resistant material capable to carry the weight of the bolts properly secured and at the same time keep the belt 200 tied to/around the tower section during transportation and lifting. The belt 200 may be flexible and long enough to may be tied around the tower section 30. The belt may be made of nylon or polyester fabric. The belt may comprise securing means, e.g. a ratchet mechanism (not shown), to be secured to the tower.

The fastening device 300 may comprise a support unit 310, at least one clamping element 320, at least one fixing plate 330 330, at least one retaining mean 340, a pivoting pin 350, a locking pin 360 as shown in Fig 2.

The support unit 310 may serve to support the at least one clamping element 320. The support unit 310 may have a first and a second installation holes so the fixing plate 330 may be pivotally mounted. The support unit 310 may be configured to be attached to the belt 200. The support unit 310 may have an inserting hole being configured to allow the belt 200 to be inserted therein, thereby allowing the support unit 310 to be movable along the belt. Alternatively, the support unit 310 may be fixed to the belt 200 e.g. by gluing it or with mechanical means such as screws. In those examples case, the support unit 310 may have a fixed position and may be not able to be moved along the belt 200.

The at least one clamping element 320 that may be configured to retain a bolt 400 therein. The at least one clamping element 320 may be a single piece with a U-shape or may comprise two separate pieces joined together forming a U-shape. The U-shape may improve the retention of the bolt 400 tighter, as may hold most part of the bolt 400 and may leave a gap to remove the bolt 400 easily. The at least one clamping element 320 may be made of a soft material e.g. rubber.

The at least one clamping element 320 may be positioned in the support unit 310. The at least one clamping element 320 may have a fixing hole which may serve to connect it to the fixing plate 330 and may have a retaining hole wherein the at least one retaining mean 340 may be pivotally mounted to facilitate the insertion or removal of the bolt 400.

The fixing plate 330 may allow the at least one clamping element 320 to rotate around the support unit 310 to facilitate the insertion or removal of the bolt 400. The fixing plate 330 may be pivotally mounted in the support unit 310 and may be also be coupled to the at least one clamping element 320, thereby enabling the at least one clamping element 320 to rotate around the support unit 310.

The fixing plate 330 may further have a pivoting slot and a locking slot matching with the first and second installation holes of the support unit 310, respectively.

The fixing plate 330 may further comprise a clamping slot and a retaining slot, which may match and may be aligned with the fixing hole and the retaining hole of the at least one clamping element 320. Two pins may be introduced and may join the fixing plate 330 to the at least one clamping element 320. One of the pins may further join the retaining mean 340 with the at least one clamping element, enabling the retaining mean 340 to rotate in respect of the at least one clamping element 320.

The at least one retaining mean 340 may further secure the bolt 400. The at least one retaining mean 340 may have two positions: an open position and a closed position. The closed position may be for further securing the bolt 400 within the at least one clamping element 320. When moved to the open position, enables releasing the bolt 400. The at least one retaining mean 340 may be placed by pressure 320 or may be pivotally mounted on the at least one clamping element 320. In cases wherein the at least one retaining mean 340 is pivotally mounted, the at least one retaining mean 340 may have a retaining slot matching the retaining hole of the at least one clamping element 320.

The at least one retaining mean 340 may be elongated and may be straight shape or U-shaped. In examples wherein the at least one retaining mean 340 is U-shaped, the retention of the bolt 400 may be improved as it adds additional support to the at least one clamping element 320 by gripping it at both sides. The at least one retaining mean 340 may be made of a stiff material such as plastic.

Fig. 3 shows a fastening device 300 which may comprise a support unit 310, at least one clamping element 320, a fixing plate 330, at least one retaining mean 340 according to any of the disclosed examples. The fastening device 300 may further comprise a slider plate 370 which may protect the tower from scratch or any damage that the belt 200 may cause to the tower.

The support unit 310 may be flat or L-shaped as shown in Fig. 3. In examples wherein the support unit 310 is L-shaped, it may provide an additional support to the at least one clamping element 320, which improves the retention of the bolt 400 within the fastening device 100.

The fastening device 300 may further comprise a pivoting pin 350 for pivotally coupling the at least one clamping element 320 to the support unit 310 with the fixing plate 330. The fixing plate 330 may have a pivoting slot matching with the first installation hole of the support unit 310, wherein the pivoting slot and the first installation hole may be aligned and the pivoting pin 350 may be introduced to connect the fixing plate 330 with the support unit 310. Therefore, the pivoting pin 350 may enable the fixing plate 330 to rotate with respect to the support unit 310. The fixing plate 330 may have at least two positions: an open position and a closed position. The fixing plate 330 may be configured to be moved from the closed position to the open position.

The fastening device 300 may further comprise a locking pin 360 that may block or unblock the fastening device 300 to the belt 200 in order to fix and secure it in a predetermined position and to allow the fastening device 300 to slide along the belt 200 into another position. The fixing plate 330 may have a locking slot matching with the second installation hole of the support unit 310. The locking slot and the second installation hole may be aligned and the locking pin 360 may be introduced to connect the fixing plate 330 with the support unit 310.

The locking pin 360 may be elongated and/or L-shaped. The locking pin 360 may have two positions: the locking position and the releasing position. In the locking position, the end point of the locking pin 310 may exert pressure on the belt 200 thereby preventing the fastening device from moving along the belt 200. By rotating the locking pin 360 into the releasing position, the end point of the locking pin 310 may not be in contact with the belt 200, thereby allowing the fastening device 300 to move along the belt 200.

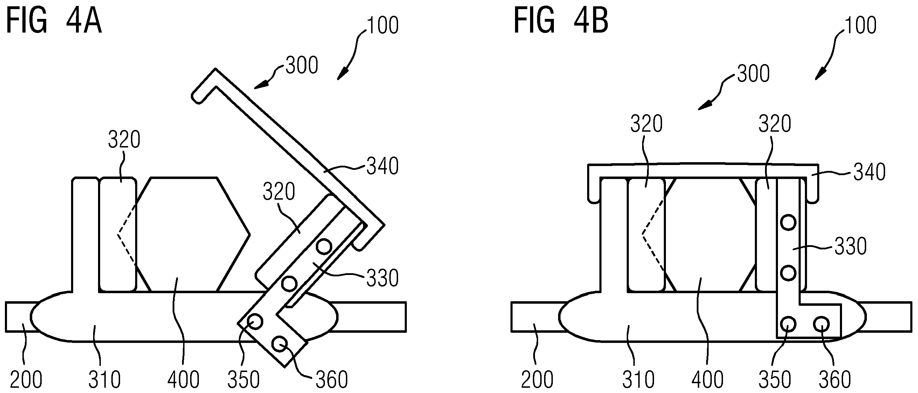

Fig. 4A depicts the fastening system 100 wherein the fixing plate 330 is in an open position. The pivoting pin 350 may enable the fixing plate 330 to rotate with respect to the support unit 310, therefore enabling the fixing plate 330 to change from a closed position to an open position. The open position may allow the insertion or removal of the bolt 400 in or from the at least one clamping element 320.

Fig. 4B depicts the fastening system 100 wherein the fixing plate 330 is in a closed position. In the closed position the bolt 400 may be secured in the clamping element 320. The bolt 400 may be further secured with the at least one retaining mean 340 that may hold the at least one clamping element 320 with the support unit 310.

The at least one retaining mean 340 may be movable from a first position to a second position, in which the at least one retaining mean 340 may connect the fixing plate 330 and the support unit 310 thereby further securing the bolt 400 within the at least one clamping element 320.

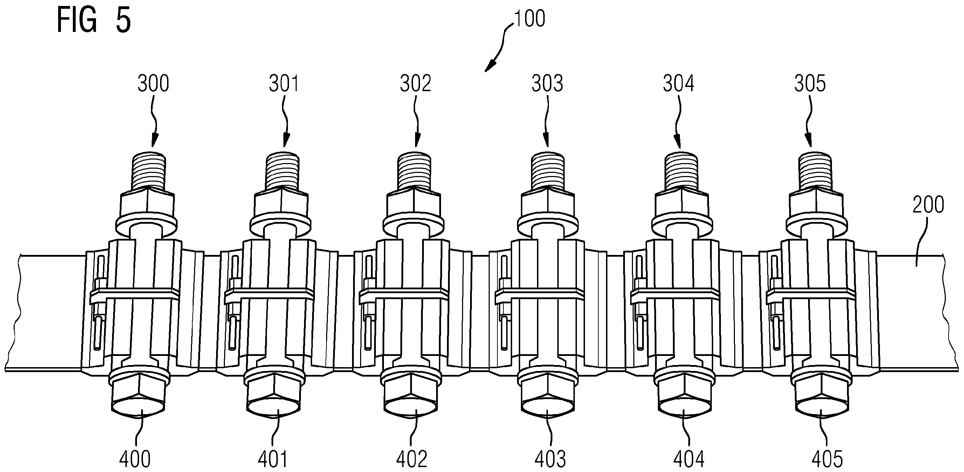

Fig. 5 depicts a fastening system 100 which may comprise a belt 200 and a plurality of fastening devices 300-305. Each one of the fastening devices 300-305 may retain one bolt 400-405. The plurality of fastening devices 300-305 may be moved along the belt 200 or may be fixed to the belt 200. The capacity of bolts at the fastening system 100 may match to the number of fastening devices 300-305.

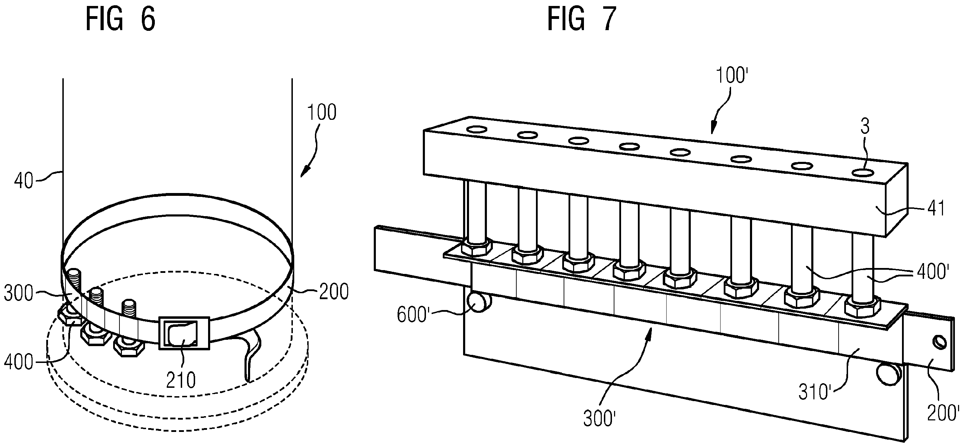

Fig. 6 depicts a fastening system 100 arranged in a tower section 40. The fastening system 100 may be secured to the tower section 40 with securing means 210 e.g. a ratchet mechanism. The bolts 400 may be arranged into the fastening devices 300 before arranging the fastening system 100 to the tower section 40.

Fig. 7 depicts an alternative fastening system 100' which may comprise a belt 200' with securing means 210' (not shown) and a fastening device 300'. The securing means 210' may be a ratchet mechanism. The fastening device 300' may comprise a support unit 310'. The support unit 300' may be have a hole and the belt 200' may be introduced within the hole. The support unit 310' may be configured to support the bolt 400' between the support unit 310' and the tower flange 41. The shape of the support unit 310' may be L-shaped. A part of the support unit 310' may have a hole, a recess or have a protruding portion so the bolt 400' may be introduced therein to be supported, preferably, the part of the support unit 310' that is not in contact with the belt 200'. Alternative, the support unit 310' may be magnetic, thus the magnetic attraction may retain the bolt 400' which may be supported in the support unit 310'. Another alternative is that the bolt 400' may be glued provisionally to the support unit 310' and removed for its installation.

The belt 200' may be arranged to the tower section. Each bolt 400' may be partially introduced into an assembling hole 3 of the tower flange, thus each bolt 400' may be placed between the flange of the tower section and the support unit 310'.

The alternative fastening system 100' differs from the fastening system 100 of Fig 2 in that the bolts 400' may be arranged between the flange of the tower section and the support unit 310', wherein the bolt 400' is partially introduced into the assembling hole 3 of the tower flange and supported in the support unit 310'. Whilst in the fastening system 100 of the Fig 2, the bolt 400 is retained in the fastening device 300 and is not in contact with the tower flange 41 until the moment of the installation.

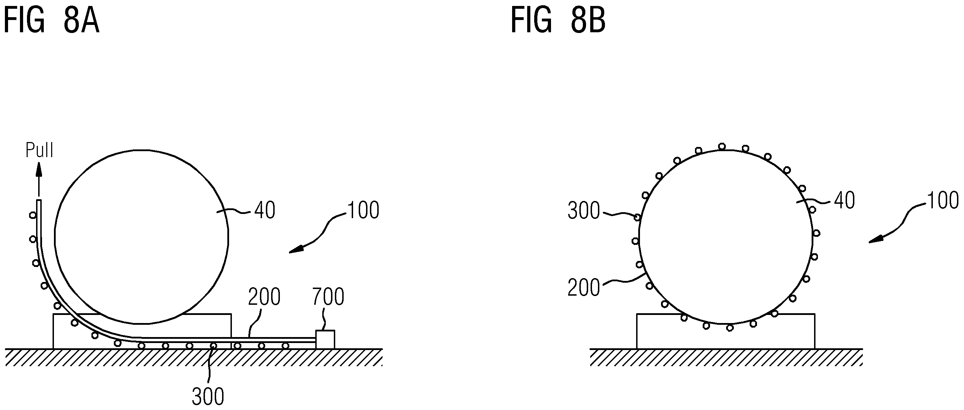

Fig. 8A depicts the process of providing a fastening system 100 and arranging it in a tower section 40. Once all the bolts 400 may be arranged into the fastening system 100, by arranging each bolt 400 per fastening device 300. Afterwards, the belt 200 may be laid down on the ground and the tower section 40 may be placed in a platform next to the belt 200, in order to have more height in respect of the belt 200. A weight 700 may be arranged on one of the ends of the belt 200 as counterweight, to keep the belt 200 laid down on the ground, and the opposite end of the belt 200 may be pull upwards surrounding the tower section 40 until met the end of the belt 200 with the weight 700, thereby closing the belt 200 as shown in Fig 8B.

Fig. 8B depicts the belt 200 arranged in the tower section 40. The belt 200 may be secured via securing means 210 e.g. a ratchet mechanism.

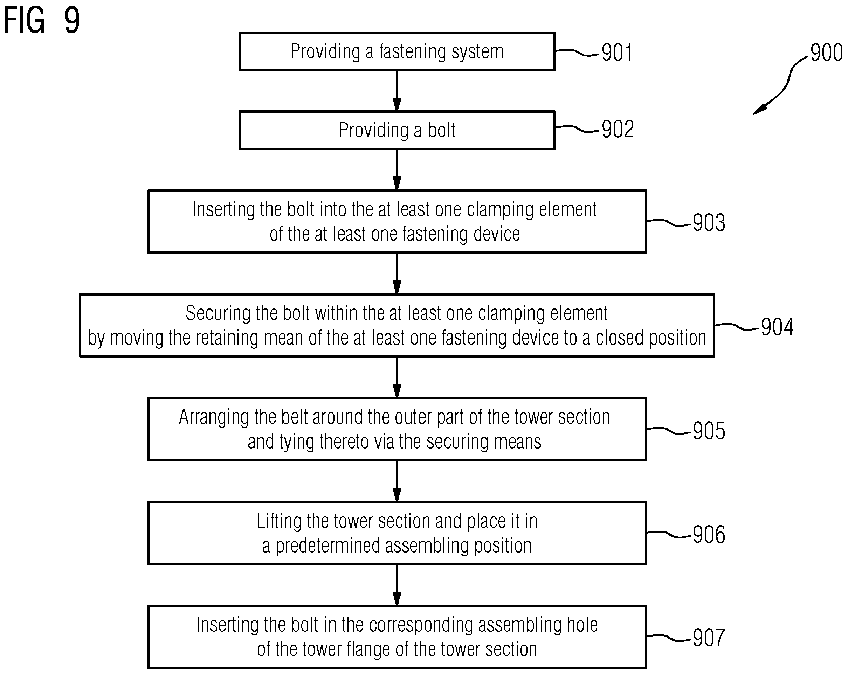

Fig. 9 shows a flow chart of a method 900 for the installation of bolts 400-405 in a wind turbine 10 with a segmented tower 20.

Firstly, a fastening system 100 according to any of the disclosed examples may, in box 901, be provided. A bolt may, in box 902, be provided. The bolt may, in box 903, be inserted into the at least one clamping element of the at least one fastening device. The bolt may, in box 904, be secured within the at least one clamping element by moving the retaining mean of the at least one fastening device to a closed position.

In case of having a plurality of bolts, this step in box 901, may be repeated for each bolt.

The belt may, in box 905, be arranged around the outer part of the tower section and tied thereto via the securing means e.g. by closing the ratchet mechanism. The tower section may, in box 906, be lifted and be placed in a predetermined assembling position. The tower sections may be placed above a previous installed tower section previously, wherein the two tower sections may be aligned. In the predetermined assembling position, the assembling holes of the flanges of two tower section e.g. a pre-installed tower section and subsequent tower section, are aligned. Once both sections are aligned, the bolts may be placed in corresponding assembling holes.

Finally, the bolt may, in box 907, be inserted in the corresponding assembling hole of the tower flange of the tower section. The bolt may be secured with a securing means e.g. a washer and a nut. In case of having a plurality of bolts, this step may be repeated for each bolt. Once the bolt or all the bolts may be mounted into their corresponding assembling holes and secured, the belt may be removed from the tower section by tampering the securing means e.g. by opening the ratchet mechanism.

The method may be repeated for assembling the next tower section.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### CLAUSES

For reasons of completeness, various aspects of the invention are set out in the following clauses:
Clause 1. A fastening system (100') for arranging bolts (400') in a tower assembly, comprising:
   a belt (200') with a securing means (210') configured to tie the belt (200') around the outer part of a tower (20) of a wind turbine (10), and
   at least one fastening device comprising:
      - A support unit (310') with a receiving hole configured to insert the belt (200') and pass it through it,
         characterized in that
         the support unit (310') is configured to support the bolt (400') between the support unit (310') and the tower flange (41).
Clause 2. The fastening system (100') according to clause 1, wherein the shape of the support unit (310') is L-shaped.
Clause 3. The fastening system (100') according to clause 1, wherein the support unit (310') have a receiving hole, a recess or a protruding portion to introduce the bolt (400') therein to be supported.
Clause 4. The fastening system (100') according to clause 1, wherein the support unit (310') may be magnetic.
Clause 5. The fastening system (100') according to clause 1, wherein the securing means (210') of the belt (200') is a ratchet mechanism.

## Claims

1. A fastening system (100) for arranging bolts (400) in a tower assembly, comprising:
a belt (200) comprising securing means (210) configured to tie the belt (200) around the outer part of a wind turbine (10) tower (20), and
at least one fastening device (300) comprising:
- a support unit (310) configured to be attached to the belt (200),
- at least one clamping element (320) configured to retain a bolt (400) therein,
- a fixing plate (330) being arranged in the support unit (310), the fixing plate (330) configured to be moved from a closed position in which the bolt (400) is to be secured and an open position to allow the insertion/removal of the bolt (400) in/from the at least one clamping element (320),
- at least one retaining mean (340) movable from a first position to a second position, in which the retaining mean (340) connects the fixing plate (330) and the support unit (310) thereby further securing the bolt (400) within the at least one clamping element (320).

2. The fastening system (100) according to claim 1, wherein the securing means (210) of the belt (200) is a ratchet mechanism.

3. The fastening system (100) according to claim 1 or 2, wherein the at least one clamping element (320) is a single piece.

4. The fastening system (100) according to claim 1 or 2, wherein the at least one clamping element (320) comprise two separate pieces.

5. The fastening system (100) according to any of claims 1 - 3, wherein the clamping element (320) is made of a soft material.

6. The fastening system (100) according to any of claims 1 - 5, wherein the fixing plate (330) further comprises a pivoting pin (350), the pivoting pin (350) connecting the fixing plate (330) to the support unit (310) and enabling the fixing plate (330) to rotate with respect to the support unit (310).

7. The fastening system (100) to any of claims 1 - 6, wherein the fixing plate (330) further comprises a locking pin (360) for releasably locking the fastening device (300) to the belt (200) .

8. The fastening system (100) according to any of claims 1 - 7, wherein the retaining mean (340) is a bar, a lever or a crowbar.

9. The fastening system (100) according to claim 8, wherein the shape of the retaining mean (340) is any of U-shaped, L-shaped or straight.

10. The fastening system (100) according to any of claims 1 - 9, further comprising a slider plate (370) arranged in the support unit (310) side to be in contact with the wind turbine tower (20).

11. The fastening system (100) according to claim 10, wherein the slider plate (370) is made of a soft material such as rubber.

12. The fastening system (100) according to any of the previous claims, wherein the support unit (310) further comprises a hole, the hole being configured to allow the belt (200) to be inserted therein, thereby allowing the support unit (310) to be movable along the belt (200).

13. The fastening system (100) according to claims 1-11, wherein the support unit (310) is fixedly attached to the belt (200) .

14. The fastening system (100) according to any of the previous claims, further comprising a plurality of fastening devices (300).

15. A method for the installation of bolts (400-405) in a wind turbine (10) with a segmented tower (20), having the segmented tower (20) at least two tower sections (20, 30, 40, 50), each tower section (20, 30, 40, 50) with a corresponding flange (22, 31, 32, 41, 42, 51) having a plurality of assembling holes, the method comprising:
- providing a fastening system (100) according to any of claims 1-14,
- providing a bolt (400-405),
- inserting the bolt (400) into the at least one clamping element (320) of at least one fastening device (300),
- securing the bolt (400-405) within the at least one clamping element (320) by moving the retaining mean (340) of the at least one fastening device (300) to a closed position,
- arranging the belt (200) around the outer part of the tower section (40), and tying thereto via the securing means (210),
- lifting the tower section (40) and place it in a predetermined assembling position, and
- inserting the bolt (400-405) in the corresponding assembling hole of the tower flange (41) of the tower section (30) .
